# EUROPÄISCHE PATENTSCHRIFT

(11) **EP 0 842 521 B1**
(45) Veröffentlichungstag und Bekanntmachung des Hinweises auf die Patenterteilung: **06.10.1999**
(21) Anmeldenummer: 96927611.2
(22) Anmeldetag: 26.07.1996
(51) Int. Cl.: H01G 4/228, H01G 9/048

(54) **ELEKTRISCHER KONDENSATOR, DARAUS HERGESTELLTE KONDENSATORANORDNUNG UND VERFAHREN ZU DESSEN BZW. DEREN HERSTELLUNG**
ELECTRIC CONDENSER, ARRAY OF SUCH CONDENSERS, AND METHOD OF PRODUCING SUCH CONDENSERS AND CONDENSER ARRAYS
CONDENSATEUR ELECTRIQUE, AGENCEMENT DE CONDENSATEURS ELECTRIQUES DE CE TYPE ET LEUR PROCEDE DE FABRICATION

(30) Priorität: 01.08.1995 DE 19528169
(43) Veröffentlichungstag der Anmeldung: 20.05.1998
(73) Patentinhaber: Hoffmann, Hans, 70374 Stuttgart (DE); Siemonsen, Sven, 70376 Stuttgart (DE)
(72) Erfinder: Hoffmann, Hans, 70374 Stuttgart (DE); Siemonsen, Sven, 70376 Stuttgart (DE)
(74) Vertreter: Dreiss, Fuhlendorf, Steimle & Becker, Patentanwälte
(86) Internationale Anmeldenummer: EP9603305
(87) Internationale Veröffentlichungsnummer: WO9705633

(56) Entgegenhaltungen:
- EP-A- 0 272 926
- WO-A-96/26552
- DE-A- 3 005 725

## Beschreibung

Die vorliegende Erfindung bezieht sich auf einen elektrischen Kondensator nach dem Oberbegriff des Anspruchs 1, ferner auf eine aus zwei oder mehr derartigen Kondensatoren aufgebaute Kondensatoranordnung nach dem Oberbegriff des Anspruchs 14 und auf ein Verfahren zum Herstellen eines elektrischen Kondensators nach dem Oberbegriff des Anspruchs 19.

Elektrische Kondensatoren sind in einer Vielzahl von Ausführungen, beispielsweise als Plattenkondensatoren, Zylinderkondensatoren, Becherkondensatoren und dgl. bekannt. Allen Kondensatoren gemeinsam ist, daß plattenförmige oder flächige schichtartige Pole einander gegenüberliegen, wobei zwischen den Polen ein Dielektrikum, wie bspw. Luft, Papier, Keramik oder dgl. angeordnet ist. Zur Erhöhung der Kapazität des Kondensators kann eine Vergrößerung der Plattenfläche durch ebenes Ineinanderverschachteln von Kondensatorplatten erreicht werden. Dennoch ergibt sich bei den bekannten Kondensatoren eine begrenzte Kapazität pro Bauvolumeneinheit. Außerdem können die bekannten Kondensatoren nicht beliebig klein gemacht werden.

Aus der EP-A-0 272 926 ist ein kondensator mit einer Elektrodenanordnung bekannt, die ein dreidimensionales gebilde umfaßt, welches durch ein Ätzverfahren hergestellt ist.

Aufgabe der vorliegenden Erfindung ist es, einen elektrischen Kondensator und eine aus zwei oder mehr derartigen Kondensatoren hergestellte Kondensatoranordnung zu schaffen, die den Anforderungen an hohe Ladungskapazitäten bei vergleichsweise geringem Bauvolumen und Gewicht gerecht werden und die kleinbauender als bisher hergestellt werden können. Desweiteren soll ein Verfahren zum Herstellen eines derartigen elektrischen Kondensators bzw. einer Kondensatoranordnung geschaffen werden, das weder arbeitsintensiver noch kostenintensiver ist.

Zur Lösung dieser Aufgabe sind bei einem elektrischen Kondensator der genannten Art bzw. bei einer Kondensatoranordnung der genannten Art bzw. bei einem Verfahren zu dessen bzw. deren Herstellung die im Anspruch 1 bzw. im Anspruch 14 bzw. im Anspruch 19 angegebenen Merkmale vorgesehen.

Mit den erfindungsgemäßen Maßnahmen ist eine Ausgestaltung der Polanordnungen als räumlicher Körper erreicht, der eine große Oberfläche im Verhältnis zum eigenen Bauvolumen aufweist. Die beiden Polanordnungen sind räumlich derart ineinander verschachtelt, daß die Abstände zwischen den Polanordnungen sehr klein werden können, was ebenso wie die vergrößerte Oberfläche der Polanordnungen zu einer hohen Kapazität wesentlich beiträgt.

Die Herstellung derartiger Kondensatoren kann bei lasergefertigten Ausnehmungen bis in den Größenordnungsbereich der Chipfertigung durchgeführt werden, so daß IC's mit aus gleichem Material bestehenden, große Kapazitäten aufweisenden integrierten Kondensatoren hergestellt werden können. Die Herstellung von Kondensatoren, bei denen die Ausnehmungen zylindrisch sind, ist wegen der im wesentlichen gleichförmigen Oberfläche der kreisrunden Ausnehmungen besonders vorteilhaft.

Weitere Vorteile der erfindungsgemäßen Maßnahmen liegen darin, daß der Verlustwinkel des Kondensators verbessert und eine geringere und lineare Temperaturabhängigkeit erreicht ist. Desweiteren sind in variabler Weise nahezu beliebige Bauformen erreichbar. Eine aufwendige Kontaktierung an den Polanordnungen für die Spannungszuführung ist nicht notwendig; außerdem sind die Anschlußpositionen variabel.

Weitere bevorzugte Ausgestaltungen der Erfindung ergeben sich aus den jeweiligen Unteransprüchen.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in teilweise abgebrochener perspektivischer Darstellung einen Kondensator gemäß einem ersten Ausführungsbeispiel vorliegender Erfindung;
- Figur 1A: in vergrößerter perspektivischer Darstellung ein Gitterelement einer der Polanordnungen nach Figur 1;
- Figur 1B: eine der Figur 1 entsprechende ausschnittsweise vergrößerte Darstellung;
- Figur 2: eine Seitenansicht gemäß Pfeil II der Figur 1, jedoch strichpunktiert und schematisch zu einem Kondensator ergänzt;
- Figur 3: eine Draufsicht gemäß Pfeil III der Figur 1;
- Figur 4: eine gegenüber der Figur 2 um 90° versetzte Seitenansicht gemäß Pfeil IV der Figur 1;
- Figur 5: in teilweise abgebrochener perspektivischer Darstellung einen Kondensator gemäß einem zweiten Ausführungsbeispiel vorliegender Erfindung, in einem noch nicht vollständig getrennten Zustand der beiden Polanordnungen;
- Figur 6: eine Seitenansicht gemäß Pfeil VI der Figur 5;
- Figur 7: eine Draufsicht gemäß Pfeil VII der Figur 5;
- Figur 8: ein an einem quaderförmigen Rohkörper als Ausgangswerkstück dargestelltes Bohrschema zur Herstellung der Polanordnungen für einen Kondensator, jedoch gemäß einem dritten bzw. vierten Ausführungsbeispiel vorliegender Erfindung;
- Figur 9: in abgebrochener Darstellung eine der Figur 3 entsprechende jedoch schematische Draufsicht auf die Polanordnungen gemäß dem dritten Ausführungsbeispiel vorliegender Erfindung;
- Figur 10: in vergrößerter perspektivischer Darstellung ein Gitterelement einer der Polanordnungen gemäß dem dritten Ausführungsbeispiel;
- Figuren 11 u. 12: jeweils in abgebrochener Darstellung eine der Figur 2 entsprechende Seitenansicht, jedoch schematisch und von zwei zueinander senkrechten Seiten der Polanordnungen für einen Kondensator gemäß dem dritten Ausführungsbeispiel;
- Figur 13: eine perspektivische Darstellung der aus einem länglich quaderförmigen Rohkörper hergestellten Polanordnungen für einen Kondensator gemäß dem vierten Ausführungsbeispiel vorliegender Erfindung; und
- Figuren 14A, B und C: den Figuren 9, 11 und 12 entsprechende abgebrochene Darstellungen des vierten Ausführungsbeispiels.

Der in der Zeichnung gemäß vier Ausführungsbeispielen dargestellte Kondensator bzw. Kondensatoranordnung 10 bzw. 110 bzw. 210 bzw. 310 in Form eines jeweils identischen räumlichen Körpers für jeden Pol der Polanordnungen 11, 12 bzw. 111, 112 bzw. 211, 212 bzw. 311, 312 stellt einen einzelnen Kondensator oder eine Kondensatorschaltung aus zwei oder mehr Kondensatoren dar. Dabei sind die eine räumlich dreidimensionale gitterartige Struktur aufweisenden Polanordnungen 11 und 12 bzw. 111 und 112 bzw. 211 und 212 bzw. 311 und 312 derart ineinander verschachtelt, daß sie in jedem Bereich jeweils einen im wesentlichen gleichen bzw. gleichmäßigen Abstand voneinander aufweisen. Da bei den dargestellten Ausführungsbeispielen die beiden Polanordnungen 11 und 12 bzw. 111 und 112 bzw. 211 und 212 bzw. 311 und 312 jeweils identischen Aufbau besitzen, reicht es an sich aus, deren konstruktiven Aufbau anhand jeweils einer Polanordnung 11 oder 12 bzw. 111 oder 112 bzw. 211 oder 212 bzw. 311 oder 312 zu beschreiben.

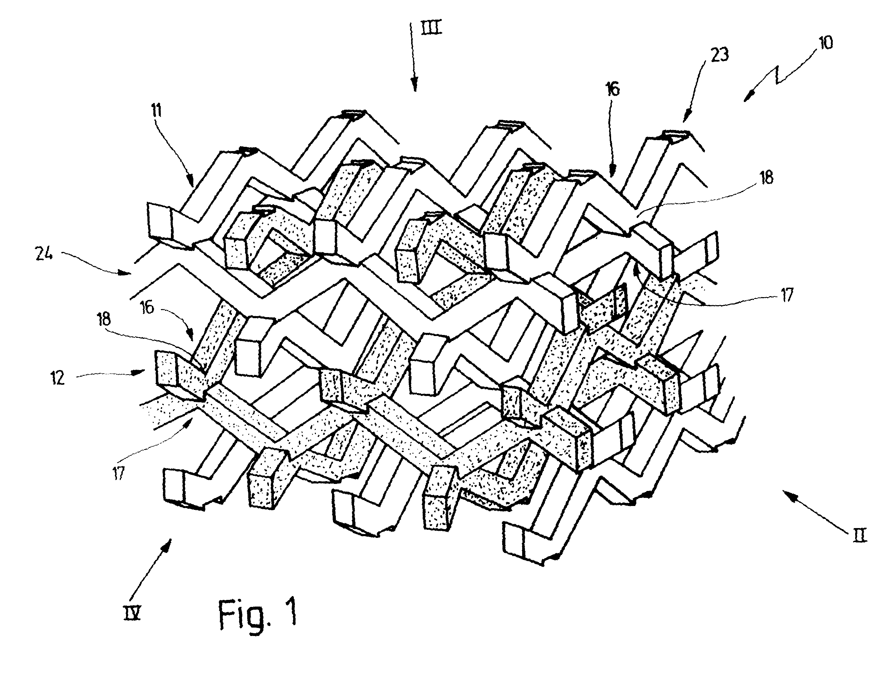

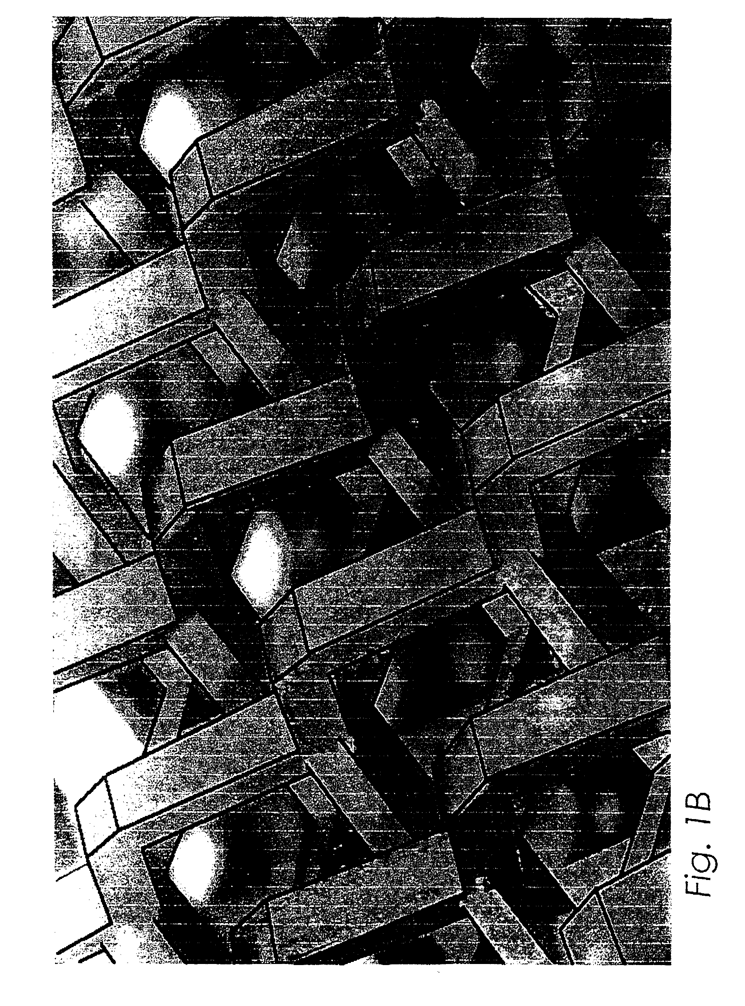

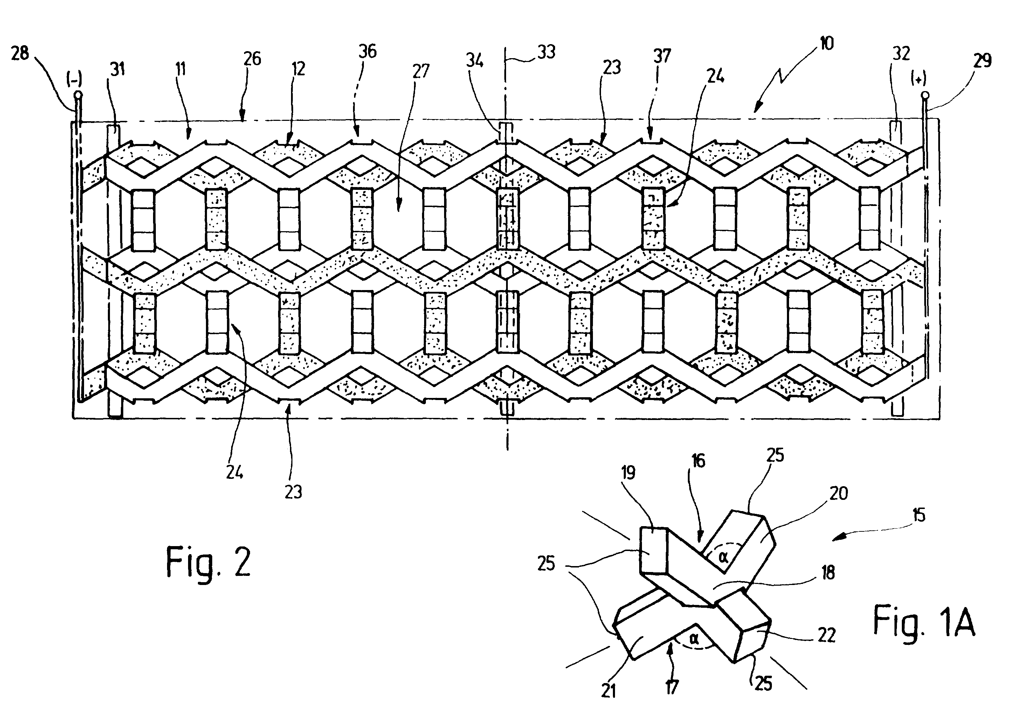

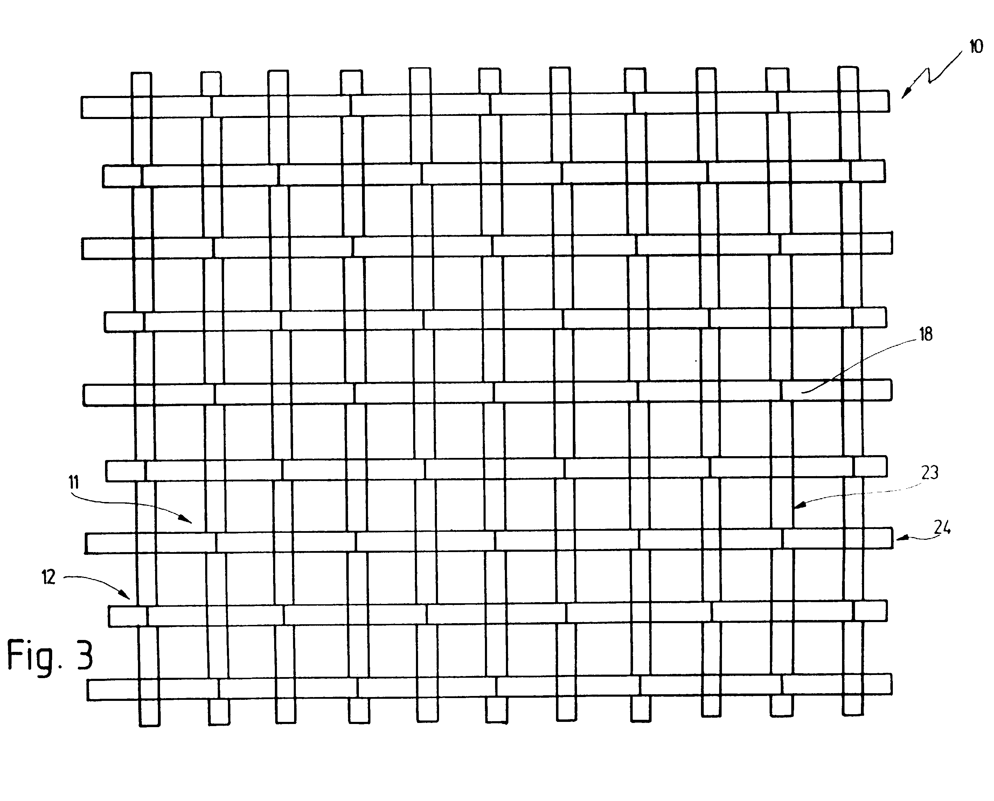

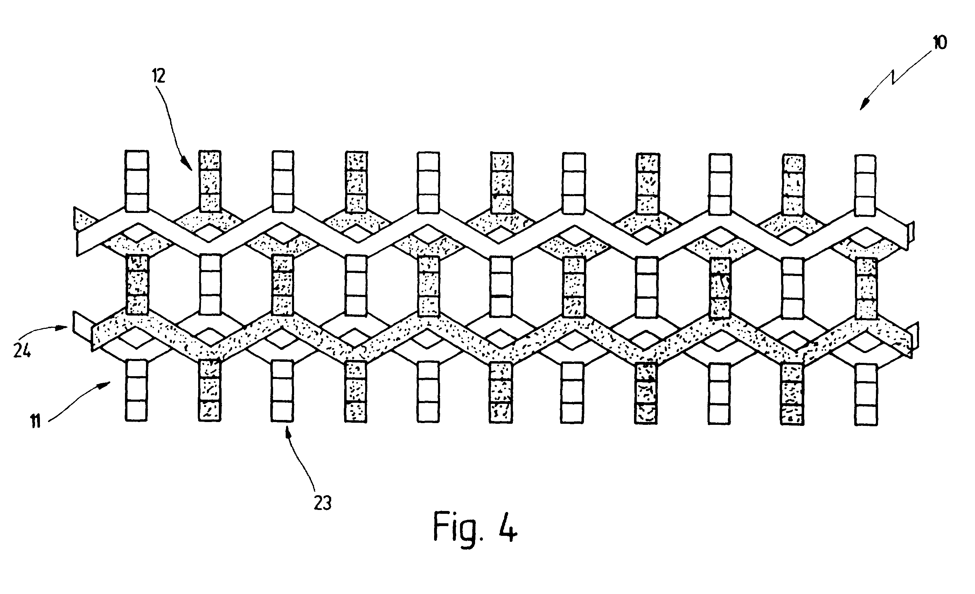

Bei dem in den Figuren 1 bis 4 dargestellten, lediglich der Beschreibung des grundsätzlich räumlichen Aufbaus dienenden Ausführungsbeispiel eines Kondensators 10 ist die Polanordnung 11 (und entsprechend vorstehendem auch die Polanordnung 12) aus einer Vielzahl von Gitterelementen 15 aufgebaut, wobei gemäß Figur 1A jedes Gitterelement 15 durch zwei etwa V-förmige Elementteilpaare 16 und 17, die in zueinander senkrechten Ebenen aneinander liegen und die in einem Knotenpunkt 18 zusammenlaufend miteinander verbunden sind, gebildet ist. Jedes V-förmige Elementteilpaar 16, 17 besitzt zwei in der gleichen Ebene liegende, identisch ausgebildete stegartige Elemententeile 19 und 20 bzw. 21 und 22, die jeweils vom Knotenpunkt 18 ausgehend unter einem bestimmten Winkel a auseinanderlaufen. Das Gitterelement 15 kann als symmetrisches strahlenförmiges Gebilde angesehen werden, dessen Knotenpunkt 18 den Mittelpunkt eines Würfels und dessen stegartigen Elemententeile 19 bis 22 zu jeweils diagonalen Ecken mehrerer Würfelflächen verlaufen. Dadurch bilden die stegartigen Elemententeile 19 bis 22 der Elemententeilpaares 16 und 17 vom Knotenpunkt 18 ausgehend jeweils zwischen sich denselben Winkel und besitzen gleiche Längen. Beim dargestellten Ausführungsbeispiel ist der Querschnitt der stegartigen Elemententeile 19 und 20 bzw. 21 und 22 quadratisch; es kann jedoch jeder beliebige andere Querschnitt, bspw. ein runder oder sechseckiger Querschnitt gewählt werden. Die Enden 25 der stegartigen Elemententeile 19 bis 22 sind jeweils mit Enden benachbarter stegartiger Elemententeile weiterer Gitterelemente 15 verbunden bzw. einstückig, so daß sich die (räumlich) dreidimensionale gitterartige Struktur aus einer Vielzahl von untereinander, übereinander und nebeneinander angeordneter Gitterelemente 15 ergibt. Es versteht sich, daß die Wahl der Anzahl der Gitterelemente 15 in den drei Richtungen des Raumes von den gewünschten Außenabmessungen des Kondensators 10 abhängig ist. Wie oben erwähnt, ist die Polanordnung 12 in derselben identischen Weise aufgebaut.

Das Ineinanderverschachteln der Polanordnungen 11 und 12 in allen Raumrichtungen zum Kondensator 10 erfolgt bei diesem Ausführungsbeispiel entweder in der Weise, daß zunächst jeweils die einzelnen Gitterelemente 15 der Polanordnungen 11 und 12 dreidimensional ineinander verschachtelt und dann mit den jeweils ebenfalls dreidimensional ineinander verschachtelten benachbarten Gitterelemente 15 verbunden werden. Der Aufbau des Kondensators 10 kann auch in der Weise erfolgen, daß zunächst eine Polanordnung 11 oder 12 in ihrer Gitterstruktur aufgebaut wird und daß dann in einer Reihe aneinandergefügte V-förmige Elementteilpaare 16 und 17 getrennt hergestellt werden und diese als Längs- und Querreihen 23 und 24 zur Bildung der jeweils anderen Polanordnung 12 oder 11 in die Gitterstruktur der einen Polanordnung 11 oder 12 dreidimensional eingefädelt und anschließend miteinander verbunden werden. Um bei nicht festem Dielektrikum die Gitter-Pole 11 und 12 auf dem vorgesehenen Abstand zu halten, sind bspw. nahe gegenüberliegender Enden des Kondensators 10, wie dies beispielhaft lediglich in Figur 2 dargestellt ist, Endscheiben 31, 32 aus elektrisch isolierendem Kunststoff gegossen, die die Stege 21 bis 22 dicht umgeben.

Zur Herstellung eines Kondensators 10 kann dieser, wie bspw. in Figur 2 strichpunktiert angedeutet, von einem Gehäuse 26 umgeben und der Innenraum 27 von einem gasförmigen, flüssigen oder festen Dielektrikum ausgefüllt sein. Ist der Kondensator 10 lediglich aus einer bspw. mit zwei Endscheiben 31 und 32 versehenen Zelle gebildet, werden die beiden gitterartigen (positive und negative) Pole 11 und 12 jeweils mit einer elektrischen Verbindung 28 bzw. 29 versehen.

Soll eine Kondensatoranordnung aus zwei oder mehr Zellen bzw. Kondensatoren aufgebaut sein, so ist dies in einfacher Weise dadurch möglich, daß zumindest eine der Gitterstruktur-Pole 11 oder 12 in einer, zwei oder mehr Ebenen aufgetrennt wird, wie dies strichpunktiert anhand der Trennebene 33 in Figur 2 dargestellt ist, und die Enden auf Abstand gebracht werden. In dieser Trennebene 33 wird zur elektrischen Trennung eine gestrichelt angedeutete Zwischenwand 34, aus elektrisch isolierendem Material, bspw. Kunststoff eingebracht, die die stegartigen Elemententeile 19 bis 22 der anderen Polanordnung 12 dicht umgreift und dadurch eine dichte Trennung zwischen den bspw. zwei Zellen für das Dielektrikum ergibt. Dadurch besitzt jede Kondensatorzelle zwei Einzelpole 36 und 37, welche aus der Gesamtpolanordnung 11 gebildet sind, und die nach wie vor als Gesamtpol ausgebildete Polanordnung 12. Es versteht sich, daß durch entsprechende elektrische Verbindungen eine elektrische Parallel- oder Reihenschaltung der beiden Kondensatorzellen vorgenommen wird.

Statt der in Figur 2 strichpunktiert dargestellten "vertikalen" Trennung kann auch eine "horizontale" Trennung des Kondensators in zwei oder mehr Zellen erfolgen. Werden die Polanordnungen 11 und 12 in der Weise gemäß Figur 2 weiter nach oben vergrößert bzw. aufgebaut, daß bspw. bei der Polanordnung 12 über den oberen Längsreihen 23 eine Anordnung von Querreihen 24 fehlt und wird in dieser Ebene eine hier horizontale Trennwand eingebracht, die in eine ohne Fehlreihe aufgebaute Polanordnung 11 in allen Raumrichtungen integriert ist, ergeben sich zwei benachbarte, voneinander getrennte Zellen, denen die Polanordnung 11 gemeinsam ist und bei denen aus der Polanordnung 12 zwei Einzelpole entstanden sind.

Es versteht sich, daß auch die jeweils andere Polanordnung aufgetrennt oder gar beide in entsprechender Weise aufgetrennt sein können. Bei mehreren Einzelzellen eines Kondensators ist es zweckmäßig, beide Polanordnungen 11 und 12 derart aufzutrennen, daß die Trennebenen der einzelnen Polanordnungen 11 und 12 jeweils versetzt zueinander angeordnet sind, so daß jeweils einer der Einzelpole zwei benachbarten Zellen zugeordnet ist.

Die Auswahl der Werkstoffe für die Gitterelemente 15 bzw. die Polanordnungen 11 und 12 und das Dielektrikum 27 kann in an sich bekannter Weise erfolgen.

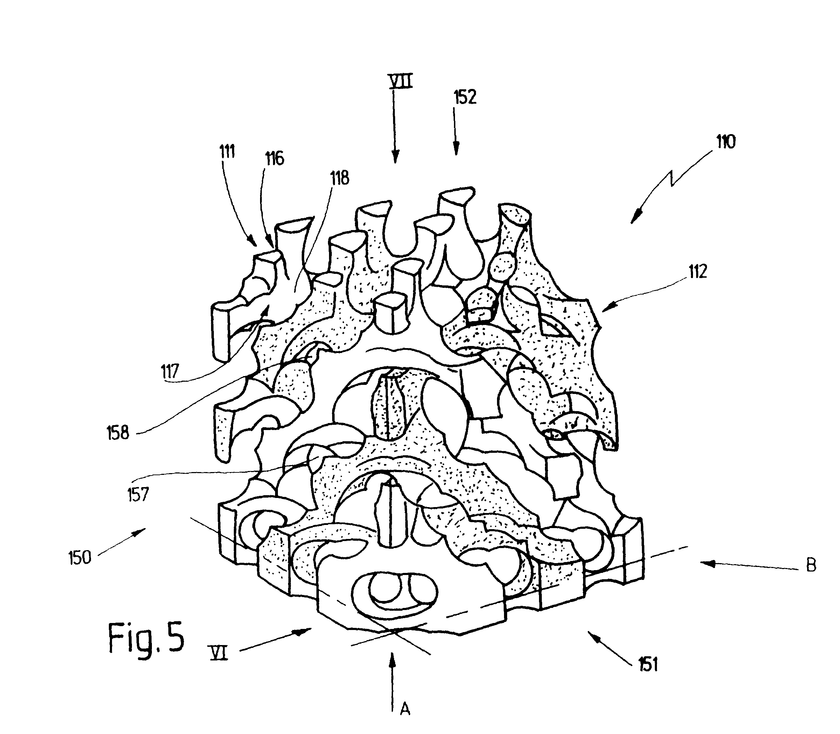

Bei dem in den Figuren 5 bis 7 dargestellten Ausführungsbeispiel des Kondensators 110 ist die dreidimensional gitterartige Struktur der Polanordnungen 111 und 112 zwar ebenfalls in gleichförmiger Ausgestaltung und jeweiliger Aneinanderreihung einzelner aus stegartigen Elementteilen 119 bis 122 aufgebauter Gitterelemente 115 gebildet, deren an die Knotenpunkte 118 ansetzende V-förmige Elementteilpaare 116 und 117 aufgrund des besonderen Herstellungsvorganges im Querschnitt jedoch nicht gleichmäßig sind.

Bei diesem Ausführungsbeispiel wird die Elektrodenanordnung 110 bspw. aus einem langgestreckten quaderförmigen Material, wie einem Stangenmaterial hergestellt. Je nach zu erreichender Endform des Kondensators kann aber das Ausgangsmaterial bzw. der Rohkörper eine an diese gewünschte Endform angepaßte Raumform beliebiger Art und Größe, also auch jeglicher unregelmäßiger Form besitzen. Zur einfacheren Darstellung sei die Herstellung des Kondensators 110 anhand eines Würfels beschrieben.

Der Würfel wird von drei zueinander senkrechten Seiten, bspw. von den Seiten 150, 151 und 152 mit jeweils mehreren Reihen 153 und 154 von durchgehenden Bohrungen versehen. Dabei sind von jeder Seite 150 bis 152 die benachbarten Bohrungsreihen 153 und 154 derart mit Bohrungen 155 und 156 versehen, daß die Bohrungen 155 und 156 benachbarter Bohrungreihen 153 und 154 zueinander versetzt angeordnet sind. Mit anderen Worten, die Bohrungen 155, 156 jeweils benachbarter Bohrungsreihen 153, 154 liegen in diagonaler Richtung jeder Würfelseite gesehen ebenfalls in einer Reihe. Dadurch durchdringen sich die einzelnen jeweils durchgehenden Bohrungen 155 und 156 aller drei Seiten 150 bis 152 in entsprechend versetzter Weise. Desweiteren werden von zwei zueinander senkrechten diagonalen Richtungen A und B her, d.h. unter einem Winkel von 45° zur Seite 150 und 151 einerseits und zur Seite 150 und einer der Seite 151 gegenüberliegenden Seite 162 andererseits Bohrungen 157 und 158 in mehreren parallelen Reihen eingebracht, wobei auch die Reihen der einen diagonalen Richtung A zu denen der anderen diagonalen Richtung B versetzt zueinander angeordnet sind.

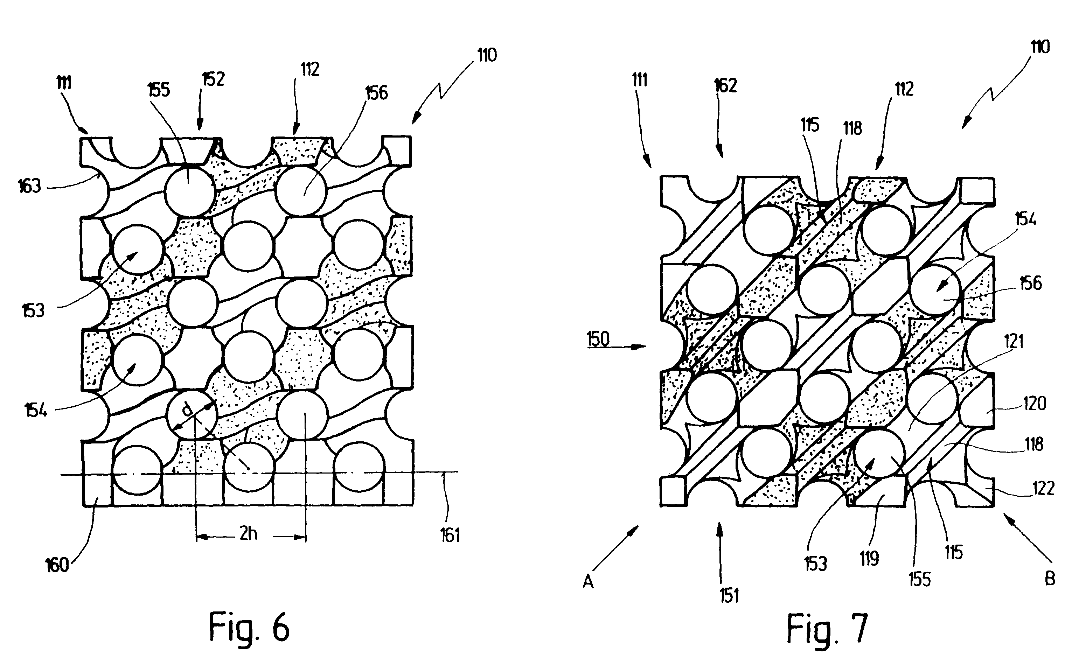

Unter einer bestimmten Bedingung reicht es aus, den Ausgangs- bzw. Rohkörper von zwei zueinander senkrechten Ebenen und von zwei zueinander senkrechten diagonalen Richtungen, bspw. den Richtungen A und B zu bohren, nämlich dann, wenn der Bohrungsdurchmesser so groß ist, daß sich die Polanordnungen noch voneinander trennen. Voraussetzung dabei ist, daß die Bohrungen jeweils gleichen Durchmesser d besitzen. Mit anderen Worten, es muß gelten d > h / √2, wobei h der halbe Abstand der Mittelpunkte zweier über einen Knoten 118 hinweg benachbarter Bohrungen 155, 156, ist (Figur 6). Ist dagegen d wesentlich kleiner, muß von noch mehr Seiten bzw. Diagonalen aus gebohrt werden.

Dadurch ergeben sich die gitterartigen Polanordnungen 111 und 112, die voneinander getrennt und in gleichmäßigem Abstand durch Seitenwandscheiben zusammengehalten sind, von denen lediglich die Seitenwand- bzw. hier Bodenscheibe 160 in den Figuren 5 und 6 noch ersichtlich ist. Die anderen Seitenwandscheiben sind bereits derart abgeschnitten, daß an den Seiten der noch als Rohling zu bezeichnenden Kondensators 110 halbzylindrische Bohrungsteile 163 verbleiben.

Wie erwähnt, haben die Stege 119 bis 122 der Gitterelemente 115 einen gleichförmig sich ändernden Querschnitt. Eine Vergleichmäßigung des Querschnitts kann dadurch erreicht werden, daß weitere Bohrungsreihen unter 45° zur Oberseite 152 aus einer oder zwei zueinander senkrechten Richtungen eingearbeitet werden. Auf diese Weise kann auf eine Vereinheitlichung des Abstandes der Polanordnungen 111 und 112 in allen Bereichen hingearbeitet werden.

Würde auch die Bodenscheibe 160 in der strichpunktiert dargestellten Ebene 161 abgetrennt werden, so könnten sich die beiden Gitterstruktur-Pole 111 und 112 in ihrer ineinander verschachtelten Anordnung relativ zueinander bewegen. Um dies zu verhindern, wird die Bodenscheibe 160 erst dann abgetrennt, wenn zum Aufbau eines Kondensators an mindestens einem Ende eine elektrisch isolierende Endscheibe (entsprechen den Endscheiben 31, 32 der Figur 2) angebracht ist, die die beiden in allen Raumrichtungen bzw. dreidimensional ineinander geschachtelten Polanordnungen 111 und 112 mechanisch sicher und auf dem vorgegebenen Abstand hält.

Auch bei diesem Ausführungsbeispiel ist es ohne weiteres möglich, den Kondensator in zwei oder mehr Zellen dadurch zu unterteilen, daß die Gitterstruktur-Pole 111 und/oder 112 in einer gewünschten Ebene durch mechanische Auftrennung in Einzelpole elektrisch getrennt ist. In entsprechender Weise können Zwischenwände zum Abtrennen der zwei oder mehr Zellenräume vorgesehen sein.

Bei diesem Ausführungsbeispiel ist es zweckmäßig, als Ausgangsmaterial ein für Kondensatoren geeignetes Metall vorzusehen. Es ist aber auch möglich, die Gitterstruktur der Pole 111 und 112 zunächst aus einem anderen Material, wie Kunststoff herzustellen, das dann mit einem entsprechenden für Kondensatoren geeigneten elektrisch leitenden Material beschichtet wird.

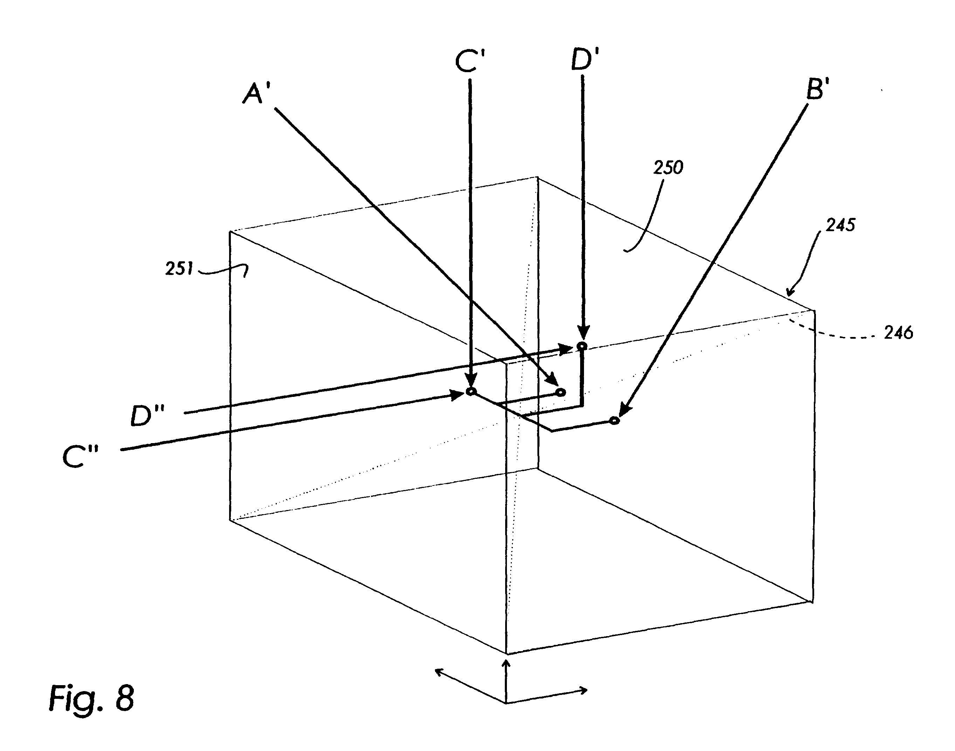

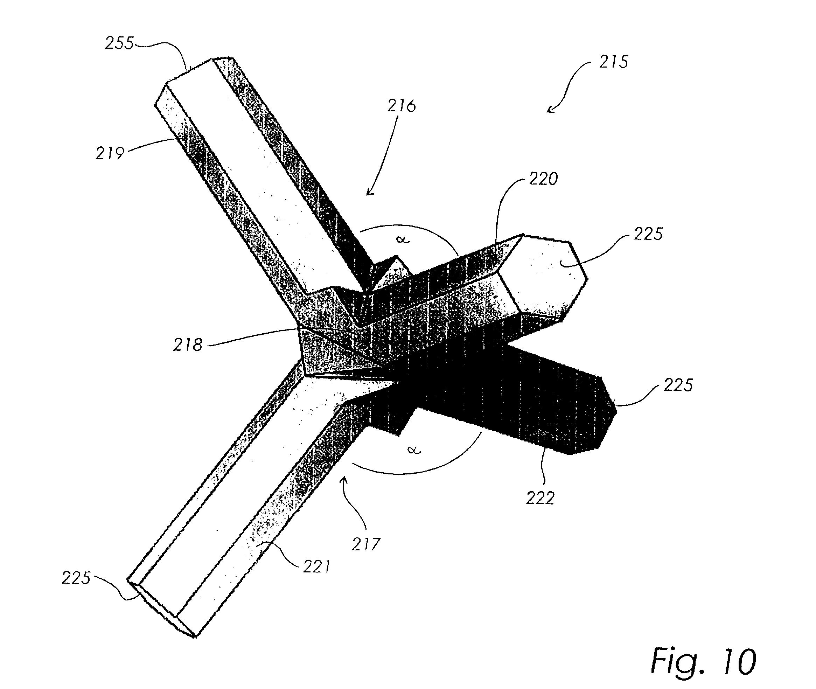

Bei dem in den Figuren 8 bis 12 dargestellten dritten Ausführungsbeispiel eines Kondensators 210 ist die gitterartige Struktur der Polanordnungen 211 und 212 ebenfalls in gleichförmiger Ausgestaltung und jeweiliger Aneinanderreihung einzelner aus stegartigen Elemententeilen 219 bis 222 aufgebauter Gitterelemente 215 gebildet, deren an die Knotenpunkte 218 ansetzende V-förmige Elementteilpaare 216 und 217 aufgrund eines vom Ausführungsbeispiel der Figuren 5 bis 7 etwas unterschiedlichen Herstellungsvorganges im Querschnitt gleichmäßig sind, wie dies beim Ausführungsbeispiel der Figuren 1 bis 4 vorgesehen ist und aus Figur 10 hervorgeht.

Bei diesem dritten Ausführungsbeispiel wird der Kondensator 210 wie der Kondensator 110 der Figuren 5 bis 7 aus einem Rohkörper beliebiger Raumform und Größe hergestellt. Der Einfachheit halber ist dies an dem quaderförmigen Rohkörper 245 nach Figur 8 dargestellt.

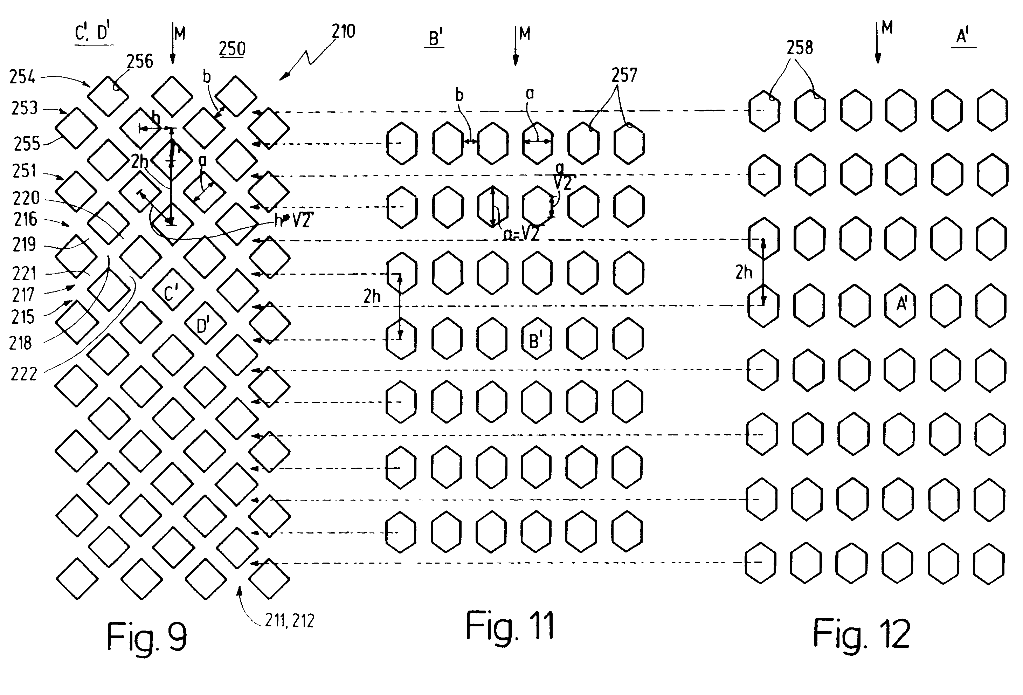

Der quaderförmige Rohkörper 245 wird von zwei zueinander senkrechten Seiten 250 und 251 gemäß den Richtungen C' und D' bzw. C" und D" mit jeweils mehreren Reihen 253 und 254 durchgehender Ausnehmungen 255 und 256, die hier quadratisch sind, versehen (vgl. Figur 9, die auch die Ansicht aus der Richtung C", D" auf die Fläche 251 darstellt). Dabei sind von jeder Seite 250 und 251 die benachbarten Ausnehmungsreihen 253 und 254 derart mit quadratischen Ausnehmungen 255 und 256 versehen, daß die Ausnehmungen 255 und 256 benachbarter Ausnehmungsreihen 253 und 254 zueinander versetzt angeordnet sind. Desweiteren werden wie beim zweiten Ausführungsbeispiel gemäß den Figuren 5 bis 7 von zwei zueinander senkrechten diagonalen Richtungen A' und B' her, d.h. unter einem Winkel von 45° zur Seite 250 und 251 einerseits und zur Seite 250 und einer der Seite 251 gegenüberliegenden Seite andererseits Ausnehmungen 257 und 258 in mehreren parallelen Reihen eingebracht, wobei auch die Reihen der einen diagonalen Richtung A' zu denen der anderen diagonalen Richtung B' versetzt zueinander angeordnet sind, wie dies aus den Figuren 11 und 12 hervorgeht. Diese Ausnehmungen 257 und 258 sind sechseckförmig ausgebildet. Alle diese Ausnehmungen 255 bis 258 sind bspw. mittels eines Lasers in den Rohkörper 245 eingeschnitten.

Durch diese Anordnung der Ausnehmungen 255 bis 258 ergeben sich, wie die Figuren 9, 11 und 12 zeigen, die einzelnen Knoten 218 und die davon ausgehenden Stege 219 bis 222, die im Querschnitt eine, bis auf die den Knotenpunkten 218 unmittelbar benachbarten Bereichen, regelmäßige Sechseckform (Figur 10) besitzen. Auch bei diesem dritten Ausführungsbeispiel wird die Mindestzahl der Ebenen bzw. Richtungen, aus denen die Ausnehmungen 255 bis 258 eingearbeitet werden müssen, durch die Querschnittsfläche der Ausnehmungen bestimmt. Ist bspw. eine Seite der quadratischen Ausnehmungen 255 und 256 mit a bezeichnet und haben die sechseckigen Bohrungen 257 und 258 eine Schmalseite mit der Größe a, so ergibt sich bei einem halben Abstand h der Ausnehmungsmitten zweier über einen Knoten 218 benachbarter Ausnehmungen 255 (Figur 9) die Maßgabe, daß gelten muß: a > h / √2. Die Verbindungslinien zwischen der Figur 9 und den Figuren 11 und 12 zeigen einerseits die versetzte Anordnung der Ausnehmungen 255 bis 258 und andererseits die Zuordnung der Mittelpunkte der Ausnehmungen 255 bis 258 zu den Mitten der Stege 219 bis 222. In allen drei Raumachsen erfolgt von einer Ausnehmung zur jeweils benachbarten derselben Richtung A', B', C', D', C" bzw. D" ein Vorschub von 2·h. Desweiteren zeigen die Pfeile M in den Figuren 9, 11 und 12 die angenommene Mitte der mit in allen Raumrichtungen ineinanderverschachtelt versehenen Polanordnungen 211 und 212 des Kondensators 210.

Bei diesem Ausführungsbeispiel wird das Trennen der Polanordnungen 211 und 212 voneinander bevorzugt in der Weise durchgeführt, daß die Seiten des Rohkörpers in Fortsetzung der Ausnehmungen 255 bis 258 mit entsprechenden halbierten Ausnehmungen versehen werden, was zu einer Trennung der Polanordnungen führt, was auch anhand der Figur 6 des zweiten Ausführungsbeispiels deutlich wird, wenn dort die Seitenwandscheibe 160 nicht abgeschnitten sondern mit halben Bohrungen an entsprechenden Stellen versehen werden würde. Das Vorsehen von Zwischenwänden im Rohkörper nach dem dritten Ausführungsbeispiel der Figuren 8 bis 12 kann dort in der Weise erfolgen, daß in einer für die Trennwand bestimmten Ebene des Rohkörpers 245 keinerlei Ausnehmungen 255 bis 258 vorgesehen werden. Dies ist durch Laserschneidtechnik ohne weiteres möglich. Die dazu vorzunehmende Trennung zumindest einer der Polanordnungen 211, 212 wird bei diesem Ausführungsbeispiel durch Abtrennen bestimmter Stege dieser Polanordnung vorgenommen.

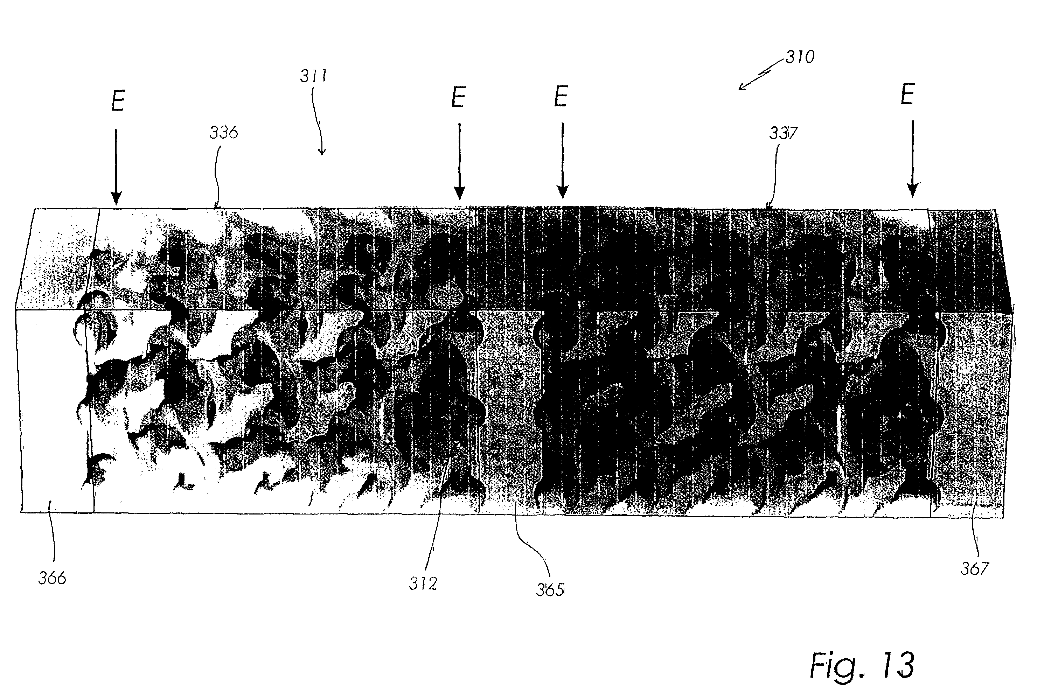

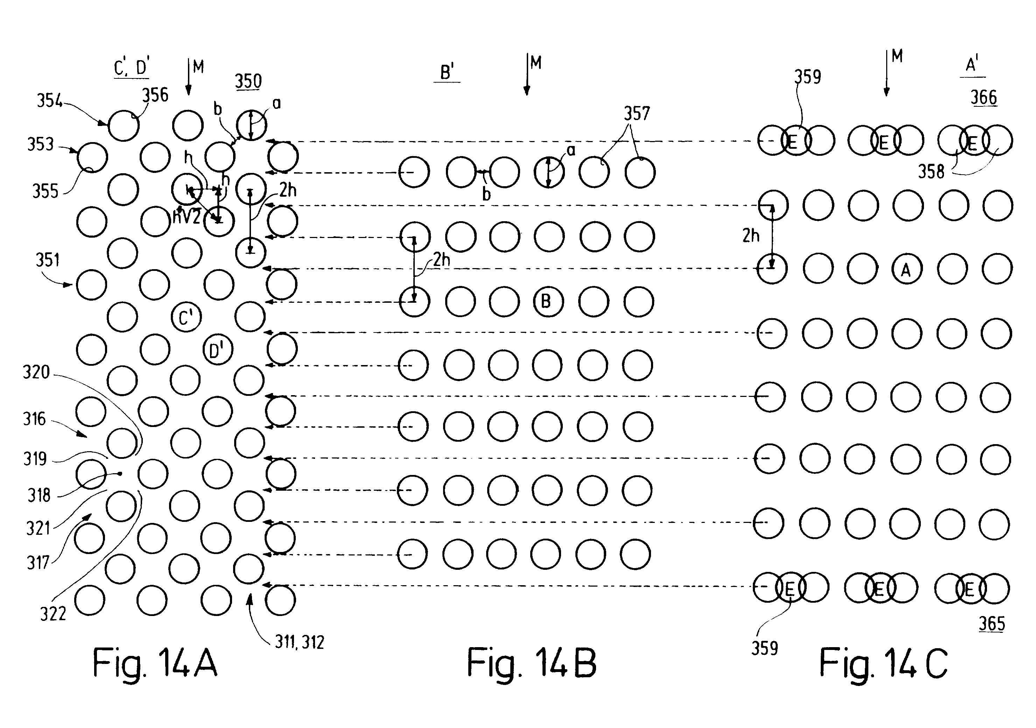

Auch bei diesem dritten Ausführungsbeispiel kann ebenso wie beim noch zu beschreibenden vierten Ausführungsbeispiel nach den Figuren 13 und 14 das Ausgangsmaterial des Rohkörpers 245 beliebiger Art sein, wie dies bereits anhand des zweiten Ausführungsbeispiels beschrieben worden ist.

Beim dritten Ausführungsbeispiel vorliegender Erfindung können die einzelnen Ausnehmungen auch in der Weise hergestellt werden, daß der Rohkörper 245 gemäß Figur 8 nach dem Herstellen der Ausnehmungen in den Richtungen A', B', C', D' in einer gedachten, hier punktiert eingezeichneten Diagonalen 246 eingespannt und um diese Diagonale in drei Schritten in einem Winkelabstand von jeweils 120° gedreht wird. Nach jeder 120°-Drehung werden die Ausnehmungen gemäß den Richtungen A', B', C' und D' eingearbeitet. Erfolgt diese Art der Einarbeitung der Ausnehmungen mit zylindrischen Ausnehmungen in Form von Bohrungen, ergibt sich eine Vergleichmäßigung der Abstände und der Oberflächen der stegartigen Elemententeile 219 bis 222 zwischen den Knotenpunkten 218.

Bei dem in Figur 13 und den Teilfiguren 14A bis C dargestellten vierten Ausführungsbeispiel eines Kondensators 310 ist die gitterartige Struktur der Polanordnungen 311 und 312 entsprechend dem Ausführungsbeispiel der Figuren 5 bis 7 ausgebildet. Mit anderen Worten, bei dem vierten Ausführungsbeispiel sind die Ausnehmungen 355 bis 358 der Ausnehmungsreihen 353 und 354 durch im Querschnitt zylindrische Bohrungen gebildet. Der wesentliche Unterschied dieses vierten Ausführungsbeispieles 310 gegenüber dem genannten zweiten Ausführungsbeispiel liegt in dem mehrzelligen Aufbau der Kondensatoranordnung 310.

Der Ausgangskörper ist auch hier ein langgestreckter Quader, ähnlich dem Rohkörper 245 der Figur 8. Entsprechend dem dort dargestellten Bohrschema werden die Reihen 353, 354 der zylindrischen Ausnehmungen 355 bis 358 in den dort dargestellten Richtungen A', B', C', D', C" bzw. D" eingearbeitet. Diese Ausnehmungsreihen sind so gesetzt, daß sich, wie aus Figur 13 hervorgeht, Endwände 366 und 367 und eine Zellentrennwand 365 ergeben. Die Zellentrennwand 365 ergibt sich dadurch, daß ein relativer Leervorschub zwischen dem Werkzeug zum Herstellen der Ausnehmungsreihen und dem Werkstück (Rohkörper) um mindestens 3h erfolgt. Entsprechendes gilt bei der Herstellung der Endwände 366 und 367, die wegen ihrer ebenen Außenfläche dünnwandiger ausgeführt sein können.

Zum Trennen der Polanordnungen 311 und 312 voneinander und zum Auftrennen der eine Polanordnung 311 in zwei Einzelpole 336 und 337 werden aus einer zur Richtung A' (Figur 8) parallelen Richtung E (Figur 14C) zu beiden Seiten der Zellentrennwand 365 und am Innenseitenbereich der Endwände 366 und 367 zylindrische Trennausnehmungen 359 und 359' eingearbeitet, die jeweils zwischen zwei benachbarten Bohrungen 358 benachbarter Bohrungspaare angeordnet sind und diese Bohrungen 358 schneiden. Aus Figur 14C ist deutlich zu ersehen, daß mit dem Einarbeiten der Trennbohrungen 359 und 359' die zwischen benachbarten Bohrungen 358 verbliebenen Stege 319 bis 322 ausgearbeitet werden bzw. verschwinden.

Gemäß einer Variante können die Trennbohrungen 359' gegenüber den Trennbohrungen 359 versetzt oder in den Bohrungsreihen der Figur 14B sein, je nachdem in welcher der Bohrungsreihen die Trennbohrungen liegen sollen. Auf diese Weise ergeben sich gemäß Figur 13 links und rechts die die Endwand 366 bzw. 367 beinhaltende Einzelpole 336 und 337 der Polanordnung 311 und die Polanordnung 312, die in ihrem mittigen Bereich die Zelltrennwand 365 besitzt, zu deren beiden Seiten die gitterartigen Strukturen in allen drei Raumrichtungen mit der gitterartigen Struktur der Einzelpole 336 bzw. der der Einzelpole 337 ineinander verschachtelt sind. Im übrigen ist die Figur 14 in allen weiteren Details und der Anordnung der Ausnehmungen (Bohrungen) mit den Figuren 9, 11 und 12 unmittelbar vergleichbar, wobei die Figur 14 ebenfalls gleichzeitig die Ansicht aus der Richtung C", D" auf die Fläche 351 darstellt.

Das in den Figuren dargestellte zweite und vierte Ausführungsbeispiel eines Kondensators 110 bzw. 310 mit den zylindrischen Ausnehmungen ist wegen der gleichmäßigen Oberflächen der einzelnen Stege der Polanordnungen bevorzugt. Außerdem kann, wenn die zylindrischen Ausnehmungen mittels Laserwerkzeug eingebracht werden, eine sehr kleinbauende Kondensatorform bis hin zu in einem IC-Baustein integrierten Kondensatoren erreicht werden.

Herstellungsbedingt ergibt sich insbesondere bei dem zweiten, dritten und vierten Ausführungsbeispiel des Kondensators 110, 210 bzw. 310 ein für das Anlegen der Spannung flächiger Abgriff.

Wesentlich am Kondensator 10 bzw. 110 bzw. 210 bzw. 310 ist die räumlich dreidimensional gitterartige Struktur aus den in allen Raumrichtungen ineinander verschachtelt angeordneten Elektroden, wobei auch unsymmetrische Gitterstrukturen möglich sind.

## Patentansprüche

1. Elektrischer Kondensator (10, 110, 210, 310), mit einer negativen Polanordnung (11, 12; 111, 112; 211, 212; 311, 312) und einer positiven Polanordnung (12, 11; 112, 111; 212, 211; 312, 311), die in einem bestimmten Abstand zueinander gehalten sind, und mit einem zwischen den Polanordnungen vorgesehenen Dielektrikum, **dadurch gekennzeichnet**, daß die beiden Polanordnungen (11, 12; 111, 112; 211, 212; 311, 312) je eine dreidimensional gitterartige Struktur aufweisen und in allen Raumrichtungen ineinander verschachtelt angeordnet sind.

2. Kondensator nach Anspruch 1, dadurch gekennzeichnet, daß die beiden Polanordnungen (11, 12; 111, 112; 211, 212; 311, 312) identische Struktur aufweisen und vorzugsweise im wesentlichen auf gleichem Abstand gehalten sind.

3. Kondensator nach Anspruch 1 oder 2, dadurch gekennzeichnet, daß jede Polanordnung (11, 12; 111, 112; 211, 212; 311, 312) durch mehrere dreidimensionale Gitterelemente (15; 115; 215; 315) aus von einem Knoten (18; 118; 218; 318) in zwei zueinander senkrechten Ebenen verlaufenden, etwa V-förmigen, stegartigen Elementteilpaaren (16, 17; 116, 117; 216, 217) gebildet ist.

4. Kondensator nach Anspruch 3, dadurch gekennzeichnet, daß die etwa V-förmigen, stegartigen Elementteilpaare (16, 17; 116, 117; 216, 217) an ihren jeweiligen Enden (25) zumindest teilweise mit weiteren Elemententeilpaaren bzw. Gitterelementen nebeneinander und/oder übereinander verbunden sind.

5. Kondensator nach Anspruch 3 oder 4, dadurch gekennzeichnet, daß die Elementteile der Elementteilpaare (16, 17; 116, 117; 216, 217) durch Stege (19 bis 22; 119 bis 122; 219 bis 222) mit über die Länge gleich- oder ungleichförmigem Querschnitt gebildet sind.

6. Kondensator nach mindestens einem der Ansprüche 1 bis 5, dadurch gekennzeichnet, daß die dreidimensionale gitterartige Struktur der Polanordnungen (11, 12) abschnittsweise dreidimensional ineinandergeschachtelt aufgebaut ist.

7. Kondensator nach mindestens einem der Ansprüche 1 bis 5, dadurch gekennzeichnet, daß die dreidimensionale gitterartige Struktur der Polanordnungen (111, 112) durch zueinander versetzte durchgehende Ausnehmungen (155 bis 158; 255 bis 258; 355 bis 358) in mindestens zwei zueinander senkrechten Ebenen (150, 151; 250, 251; 350, 351) und mindestens in zwei dazu um 45° verdrehten Ebenen (A, B) in einem Rohkörper (245) gebildet ist.

8. Kondensator nach Anspruch 7, dadurch gekennzeichnet, daß die Ausnehmungen (155 bis 158) durch Bohrungen gebildet sind.

9. Kondensator nach Anspruch 7, dadurch gekennzeichnet, daß die Ausnehmungen (255 bis 258) durch quadratische Ausnehmungen aus zwei zueinander senkrechten Richtungen (C', D'; C", D") und durch sechseckige Ausnehmungen aus zwei zueinander senkrechten diagonalen Richtungen (A, B; A', B') gebildet und vorzugsweise lasergeschnitten sind.

10. Kondensator nach mindestens einem der Ansprüche 7 bis 9, dadurch gekennzeichnet, daß die Trennung der Polanordnungen (111, 112; 211, 212; 311, 312) durch zumindest teilweises Abtrennen einer Wandscheibe an allen Seiten des Rohkörpers (245) gebildet ist.

11. Kondensator nach mindestens einem der Ansprüche 7 bis 9, dadurch gekennzeichnet, daß die Trennung der Polanordnungen (111, 112; 211, 212; 311, 312) durch bspw. bohrendes oder bspw. laserschneidendes Entfernen bestimmter Stege bzw. durch Herstellen von Trennausnehmungen (359, 359') zwischen den beiden Polanordnungen erfolgt.

12. Kondensator nach mindestens einem der Ansprüche 1 bis 11, dadurch gekennzeichnet, daß die gitterartige Struktur aus Kunststoff und mit einer entsprechenden Beschichtung versehen ist.

13. Kondensator nach mindestens einem der Ansprüche 1 bis 11, dadurch gekennzeichnet, daß die gitterartige Struktur aus einem geeigneten Metall ist.

14. Aus zwei oder mehr Kondensatoren (10; 110; 210; 310) nach mindestens einem der vorhergehenden Ansprüche aufgebaute Kondensatoranordung, dadurch gekennzeichnet, daß mindestens eine der gitterartigen Strukturen der Polanordnungen (11, 12; 111, 112; 211, 212; 311, 312) in einer Ebene durchtrennt ist.

15. Kondensatoranordnung nach Anspruch 14, dadurch gekennzeichnet, daß die jeweils andere der gitterartigen Strukturen der Polanordnungen (12, 11; 112, 111; 212, 211; 312, 311) in der Trennebene (33) der einen gitterartigen Struktur mit einer Zwischenwand (34) versehen ist.

16. Kondensatoranordnung nach Anspruch 15, dadurch gekennzeichnet, daß die Zwischenwand (365) dadurch gebildet ist, daß in einer entsprechenden Ebene des Rohkörpers (245) keine Bohrungen bzw. Ausnehmungen eingebracht sind.

17. Kondensatoranordnung nach Anspruch 16, dadurch gekennzeichnet, daß die Zwischenwand (365) Teil der einen Elektrode (312, 311) und die andere Elektrode (311, 312) der Zwischenwand (365) zu beiden Seiten benachbart von dieser vorzugsweise mittels Trennausnehmungen (359) abgetrennt ist.

18. Kondensatoranordnung nach mindestens einem der Ansprüche 14 bis 17, dadurch gekennzeichnet, daß die gitterartige Struktur der beiden Polanordnungen (11, 12; 111, 112; 311, 312) in jeweils zueinander im Abstand angeordneten Ebenen getrennt ist.

19. Verfahren zum Herstellen eines elektrischen Kondensators nach mindestens einem der Ansprüche 1 bis 5 und 7 bis 13, gekennzeichnet durch das Einarbeiten von zueinander versetzten durchgehenden Ausnehmungen in mindestens zwei zueinander senkrechten Ebenen und in mindestens zwei dazu um 45° versetzten Ebenen eines Rohkörpers zum Erreichen einer dreidimensional gitterartigen Gesamtstruktur und das Auftrennen der Gesamtstruktur in mindestens zwei die Polanordnungen darstellende Einzelstrukturen.

20. Verfahren nach Anspruch 19, dadurch gekennzeichnet, daß der Rohkörper um eine diagonale Raumachse in Schritten von je 120 gedreht und jeweils mit den Ausnehmungen versehen wird.

21. Verfahren nach Anspruch 19 oder 20, dadurch gekennzeichnet, daß mindestens eine der Gitterstruktur-Pole in einer Zwischenebene aufgetrennt und in dieser Ebene eine Zwischenwand über die gesamte Querschnittsfläche der Polanordnung eingebracht wird.

22. Verfahren nach Anspruch 21, dadurch gekennzeichnet, daß die Zwischenwand dadurch gebildet wird, daß in einer entsprechenden Ebene des Rohkörpers keine Ausnehmungen eingebracht werden und daß eine Trennung mindestens einer der Pole in mindestens zwei Polteile durch Entfernen entsprechender stegartiger Elemententeile vorgenommen wird.

23. Verfahren nach Anspruch 22, dadurch gekennzeichnet, daß die stegartigen Elemententeile durch Einbringen von Trennausnehmungen entfernt werden.

24. Verfahren nach mindestens einem der Ansprüche 19 bis 23, dadurch gekennzeichnet, daß die Ausnehmungen gebohrt oder lasergeschnitten werden.

## Claims

1. An electrical capacitor (10, 110, 210, 310) with a negative pole arrangement (11, 12; 111; 112; 211, 212; 311, 312) and a positive pole arrangement (12, 11; 112, 111; 212, 211; 312, 311), which are kept at a defined distance from each other, and with a dielectric provided between the pole arrangements, characterized in that the two pole arrangements (11, 12; 111, 112; 211, 212; 311, 312) each have a three-dimensional grid-like structure and are arranged nested inside each other in all spatial direction.

2. The capacitor in accordance with claim 1, characterized in that the two pole arrangements (11, 12; 111, 112; 211, 212; 311, 312) have identical structures and are essentially preferably maintained at the same distance.

3. The capacitor in accordance with claim 1 or 2, characterized in that each pole arrangement (11, 12; 111, 112; 211, 212; 311, 312) is formed by a plurality of three-dimensional grid elements (15, 115, 215, 315), made of approximately V-shaped, strip-like element section pairs (16, 17; 116, 117; 216, 217), which extend, starting at a junction (18, 118, 218, 318), in two planes extending vertically in respect to each other.

4. The capacitor in accordance with claim 3, characterized in that the approximately V-shaped, strip-like element section pairs (16, 17; 116, 117; 216, 217) are connected next to each other and/or above each other at their respective ends (25) at least partially with further element section pairs, or respectively grid elements.

5. The capacitor in accordance with claim 3 or 4, characterized in that the element section pairs (16, 17; 116, 117; 216, 217) are constituted by strips (19 to 22; 119 to 122; 219 to 222), which have cross sections which a similar or dissimilar over their length.

6. The capacitor in accordance with at least one of claims 1 to 5, characterized in that the three-dimensional, grid-like structure of the pole arrangements (11, 12) is constructed to be three-dimensionally nested in sections.

7. The capacitor in accordance with at least one of claims 1 to 5, characterized in that the three-dimensional, grid-like structure of the pole arrangements (11, 12) is formed in a blank (245) by continuous recesses (155 to 158, 255 to 258, 355 to 358), which are offset in respect to each other, in at least two planes (150, 151; 250, 251; 350, 351), which extend vertically in respect to each other, and at least two planes (A, B), rotated by 45° in respect to them.

8. The capacitor in accordance with claim 7, characterized in that the recesses (155 to 158) are constituted by bores.

9. The capacitor in accordance with claim 7, characterized in that the recesses (255 to 258) are constituted by square recesses from two directions (C', D'; C", D") extending vertically in respect to each other, and by hexagonal recesses from two directions (A, B; A', B') extending vertically in respect to each other, and are preferably cut by a laser.

10. The capacitor in accordance with at least one of claims 7 to 9, characterized in that the separation of the pole arrangements (111, 112; 211, 212; 311, 312) is provided by the at least partial separation of a wall disk on all sides of the blank (245).

11. The capacitor in accordance with at least one of claims 7 to 9, characterized in that the separation of the pole arrangements (111, 112; 211, 212; 311, 312) is provided by the removal, for example by drilling or for example by laser cutting, of defined strips, or respectively by making separation recesses (359, 359') between the two pole arrangements.

12. The capacitor in accordance with at least one of claims 1 to 11, characterized in that the grid-like structure is made of plastic and provided with an appropriate coating.

13. The capacitor in accordance with at least one of claims 1 to 11, characterized in that the grid-like structure is made of a suitable metal.

14. A capacitor array constructed of two or more capacitors (10, 110, 210, 310) in accordance with at least one of the preceding claims, characterized in that at least one of the grid-like structures of the pole arrangements (11, 12; 111, 112; 211, 212; 311, 312) is cut through in one plane.

15. The capacitor array in accordance with claim 14, characterized in that the respectively other one of the grid-like structures of the pole arrangements (12, 11; 112, 111; 212, 211; 312, 311) in the separation plane (33) of the one grid-like structure is provided with a partition (34).

16. The capacitor array in accordance with claim 15, characterized in that the partition (365) is formed in that no bores, or respectively recesses have been cut in a corresponding plane of the blank (245).

17. The capacitor array in accordance with claim 16, characterized in that the partition (365) is a part of the one electrode (312, 311), and the other electrode (311, 312) adjoins the partition (365) on both sides and is separated from it preferably by means of separation recesses (359).

18. The capacitor array in accordance with at least one of claims 14 to 17, characterized in that the grid-like structure of the two pole arrangements (11, 12; 111, 112; 311, 312) is separated in planes which are respectively disposed at a distance from each other.

19. A method for producing an electric capacitor in accordance with at least one of claims 1 to 5 and 7 to 13, characterized by the cutting of continuous recesses, which are offset in respect to each other, in at least two planes, which extend vertically in respect to each other, and in at least two planes, which are offset by 45° from them, of a blank, for achieving a three-dimensional, grid-like total structure, and the separation of the total structure into at least two individual structures constituting the pole arrangements.

20. The method in accordance with claim 19, characterized in that the blank is rotated around a diagonal spatial axis in steps of respectively 120°, and is respectively provided with the recesses.

21. The method in accordance with claim 19 or 20, characterized in that at least one of the grid-structure poles is cut open in an intermediate plane, and a partition extending over the entire cross-sectional surface of the pole arrangement is cut in this plane.

22. The method in accordance with claim 21, characterized in that the partition is constituted in that no recesses are cut into a corresponding plane of the blank, and that a separation of at least one of the poles into at least two pole sections is provided by the removal of appropriate strip-like element sections.

23. The method in accordance with claim 22, characterized in that the strip-like element sections are removed by cutting separation recesses.

24. The method in accordance with at least one of claims 19 to 23, characterized in that the recesses are drilled or laser-cut.

## Revendications

1. Condensateur électrique (10, 110, 210, 310) comportant une unité de pôle négatif (11, 12; 111, 112; 211, 212; 311, 312) et une unité de pôle positif (12, 11; 112, 111; 212, 211; 312, 311), qui sont maintenues à une certaine distance l'une de l'autre, et un diélectrique prévu entre les unités de pôle, caractérisé en ce que les deux unités de pôle (11, 12; 111, 112; 211, 212; 311, 312) présentent chacune une structure tridimensionnelle en forme de grille et sont disposés avec imbrication les unes dans les autres dans toutes les directions spatiales.

2. Condensateur selon la revendication 1, caractérisé en ce que les deux unités de pôle (11, 12; 111, 112; 211, 212; 311, 312) ont une structure identique et sont maintenues de préférence sensiblement à la même distance.

3. Condensateur selon la revendication 1 ou 2, caractérisé en ce que chaque unité de pôle (11, 12; 111, 112; 211, 212; 311, 312) est constituée au moyen de plusieurs éléments tridimensionnels en forme de grille (15; 115; 215; 315) réalisés à partir de paires d'éléments partiels (16, 17; 116, 117; 216, 217) sous la forme de barrettes sensiblement en forme de V qui s'étendent à partir d'un noeud (18; 118; 218; 318) dans deux plans perpendiculaires l'un par rapport à l'autre.

4. Condensateur selon la revendication 3, caractérisé en ce que les paires d'éléments partiels (16, 17; 116, 117; 216, 217) sous la forme de barrettes sensiblement en forme de V sont reliés, à leurs extrémités respectives (25), au moins partiellement, avec d'autres paires d'éléments partiels ou d'autres éléments de grille en étant disposés les uns à côté des autres et/ou les uns au dessus des autres.

5. Condensateur selon la revendication 1 ou 2, caractérisé en ce que les éléments partiels des paires d'éléments partiels (16, 17; 116, 117; 216, 217) sont constitués par des traverses (19 à 22; 119 à 122; 219 à 222) présentant, sur leur longueur, une section de même forme ou de formes différentes.

6. Condensateur selon au moins l'une quelconque des revendications 1 à 5, caractérisé en ce que la structure tridimensionnelle en forme de grille des unités de pôles (11, 12) est structurée, par sections, de manière tridimensionnelle avec imbrication les unes dans les autres.

7. Condensateur selon au moins l'une quelconque des revendications 1 à 5, caractérisé en ce que la structure tridimensionnelle en forme de grille des unités de pôles (111, 112) est formée dans un corps brut (245) au moyen d'évidements (155 à 158; 255 à 258; 355 à 358) traversants, décalés les uns par rapport aux autres et aménagés dans au moins deux plans (150, 151; 250, 251; 350, 351) perpendiculaires entre eux et dans au moins deux plans (A, B) décalés de 45° par rapport à ces derniers.

8. Condensateur selon la revendication 7, caractérisé en ce que les évidements (155 à 158) sont constitués par des perçages.

9. Condensateur selon la revendication 7, caractérisé en ce que les évidements (255 à 258) sont constitués par des évidements rectangulaires aménagés dans deux directions perpendiculaires entre elles (C', D'; C", D") et par des évidements hexagonaux aménagés dans deux directions diagonales perpendiculaires entre elles (A, B; A', B') et sont de préférence découpés au laser.

10. Condensateur selon au moins l'une quelconque des revendications 7 à 9, caractérisé en ce que la séparation des unités de pôle (111, 112; 211, 212; 311, 312) est formée par séparation au moins partielle d'une rondelle de paroi sur toutes les faces du corps brut (245).

11. Condensateur selon au moins l'une quelconque des revendications 7 à 9, caractérisé en ce que la séparation des unités de pôle (111, 112; 211, 212; 311, 312) est réalisée par l'enlèvement, par exemple par perçage, par exemple par découpage au laser, de traverses déterminées ou par réalisation d'évidements de séparation (359, 359') entre les deux unités de pôle.

12. Condensateur selon au moins l'une quelconque des revendications 1 à 11, caractérisé en ce que la structure en forme de grille est en matière synthétique et munie d'un revêtement correspondant.

13. Condensateur selon au moins l'une quelconque des revendications 1 à 11, caractérisé en ce que la structure en forme de grille est en métal approprié.

14. Ensemble de condensateurs constitué de deux ou plusieurs condensateurs (10, 10, 210, 310) réalisés selon au moins une des revendications précédentes, caractérisé en ce qu'au moins une des structures en forme de grille des unités de pôle (11, 12; 111; 112; 211, 212; 311, 312) est séparée dans un plan.

15. Ensemble de condensateurs selon la revendication 14, caractérisé en ce que, à chaque fois, l'autre des structures en forme de grille unités de pôle (12, 11; 112, 111; 212, 211; 312, 311) est munie, dans le plan de séparation (33) de l'une des structures en forme de grille, d'une paroi intermédiaire (34).

16. Ensemble de condensateurs selon la revendication 15, caractérisé en ce que la paroi intermédiaire (365) est réalisée par le fait que, dans un plan correspondant du corps brut (245), aucun perçage ou évidement n'est effectué.

17. Ensemble de condensateurs selon la revendication 16, caractérisé en ce que la paroi intermédiaire (365) est une partie de l'une des électrodes (312, 311) et en ce que l'autre électrode (311, 312) de la paroi intermédiaire (365) est, au voisinage des deux faces, séparée de cette dernière de préférence au moyen d'évidements de séparation (359).

18. Ensemble de condensateurs selon au moins l'une quelconque des revendications 14 à 17, caractérisé en ce que la structure en forme de grille des deux unités de pôle (11, 12; 111, 112; 211, 212; 311, 312) est séparée, à chaque fois, dans des plans disposés à distance l'un de l'autre..

19. Procédé pour la fabrication d'un condensateur électrique selon au moins une des revendications 1 à 5 et 7 à 13, caractérisé par la réalisation d'évidements traversants, décalés les uns par rapport aux autres et aménagés dans au moins deux plans perpendiculaires entre eux et dans au moins deux plans décalés de 45° par rapport à ces derniers d'un corps brut, pour obtenir une structure d'ensemble tridimensionnelle en forme de grille et par la séparation de la structure d'ensemble en au moins deux structures individuelles représentant les unités de pôle.

20. Procédé selon la revendication 19, caractérisé en ce que le corps brut subit une rotation autour d'un axe spatial diagonal par degrés de 120° et en ce qu'il est muni, à chaque fois, des évidements.

21. Procédé selon la revendication 19 ou 20, caractérisé en ce qu'au moins un des pôles à structure en forme de grille est séparé dans un plan intermédiaire et en ce que, dans ce plan, une paroi intermédiaire est aménagée sur toute la superficie de la section de l'unité de pôle.

22. Procédé selon la revendication 21, caractérisé en ce que la paroi intermédiaire est réalisée par le fait que, dans un plan correspondant du corps brut, on n'aménage pas d'évidements et en ce que l'on réalise une séparation d'au moins un des pôles en deux parties de pôle par enlèvement d'éléments partiels en forme de barrettes correspondants.

23. Procédé selon la revendication 22, caractérisé en ce que les éléments partiels en forme de barrettes sont enlevés par aménagement d'évidements de séparation.

24. Procédé selon au moins l'une quelconque des revendications 19 à 23, caractérisé en ce que les évidements sont obtenus par perçage ou par découpage au laser.
